# EUROPEAN PATENT APPLICATION

(11) **EP 2 281 708 A1**
(43) Date of publication of application: **09.02.2011**
(21) Application number: 10007931.8
(22) Date of filing: 29.07.2010
(51) Int. Cl.: B60K 17/04, G01P 1/02, G01P 3/488, B60B 35/16

(54) **Vehicle wheel speed sensors**

(30) Priority: 07.08.2009 GB 0913780
(71) Applicant: AGCO GmbH, 87616 Marktoberdorf (DE)
(72) Inventor: Glaser, Bernd, Marktoberdorf 87616 (DE)
(74) Representative: Morrall, Roger

(57) **Abstract**

A vehicle axle (10), has a casing (II), a central differential (12) which drives outer wheel hubs (13) via respective final reduction gears (15), and drive shafts (14) housed within the axle casing. The axle casing supports at least one wheel speed sensing device (18.19) on the differential side of the associated reduction gear. Each wheel speed sensing device comprises a toothed formation (18) carried by or formed on the associated drive shaft (14) to rotate therewith and a magnetic field effect sensor supported on the axle casing(II) adjacent the toothed formation to provide an output signal which varies in dependence with speed of rotation of the drive shaft and hence the associated wheel hub (13). An output cable (22) leads from the sensor (19) to an output aperture (24) in the casing via an internal passage (23) and the sensor (19) is mounted in a support aperture (11a) in a support chamber (26) of the axle casing. The sensor is protected in the support chamber (26) by a cap (27) which closes-off the chamber.

## Description

This invention relates to sensor arrangements for detecting the speed of rotation of vehicle wheels and particularly, though not exclusively for detecting the speed of the wheels of agricultural tractors or similar vehicles.

It is well known to use magnetic field detector sensors (Hall sensors) for detecting the speed of rotation of the wheels of a wide range of vehicles. Such sensors typically comprise a rotating toothed element which passes in close proximity to the sensor to produce a sensor output which varies in frequency in dependence on the speed of which the toothed elements and air gaps alternatively pass the sensor. Whilst such sensors operate reasonably efficiently they can suffer from operational problems due to variation in the air gap between the teeth and the sensor and they can also be subject to damage when in use, particularly when used on vehicles such as agricultural tractors which operate in adverse operating conditions.

It is an object of the present invention to provide a vehicle axle which includes a wheel speed sensing arrangement which at least mitigates the above problems and which is suitable for on an agricultural tractor.

Thus according to the present invention there is provided a vehicle axle having a casing, a central differential which drives outer wheel hubs via respective final reduction gears, and drive shafts housed within the axle housing, the axle being **characterised in that** the axle casing supports at least one wheel speed sensing device on the differential side of the associated final reduction gear.

Preferably two wheel speed sensing devices are supported one each side of the central differential between the differential and the respective final reduction gear.

If the axle is a front axle, the wheel hubs may each be steerable about a respective substantially vertical steering axis located between each respective drive shaft and the associated final reduction gear.

In a convenient arrangement the or each wheel speed sensing device comprises a toothed formation carried by or formed on the associated drive shaft to rotate therewith and a magnetic field effect sensor supported on the axle casing adjacent the toothed formation to provide and output signal which varies in dependence with the speed of rotation of the drive shaft and hence the associated wheel hub.

The sensor may be mounted within the axle casing and an output cable leading from the sensor may pass within the casing from the sensor to an output aperture in the casing.

Advantageously this output cable may extend from the sensor to the output aperture via an internal passage within a wall of the casing. This produces a particularly well protected form of the present invention. The output aperture may be provided in an upper surface of the axle casing thus even further protecting the sensor from damage during use of the associated vehicle.

For example, the sensor may be mounted in a support aperture in a support chamber of the axle casing, the sensor being protected in the support chamber by a cap which closes off the chamber.

One embodiment of the present invention will now be describe, by way of example only, with reference to the accompanying drawings in which:-
- Figure 1: shows diagrammatically a front axle of an agricultural tractor in accordance with the present invention;
- Figure 2: shows a perspective view of the axle of Figure 1;

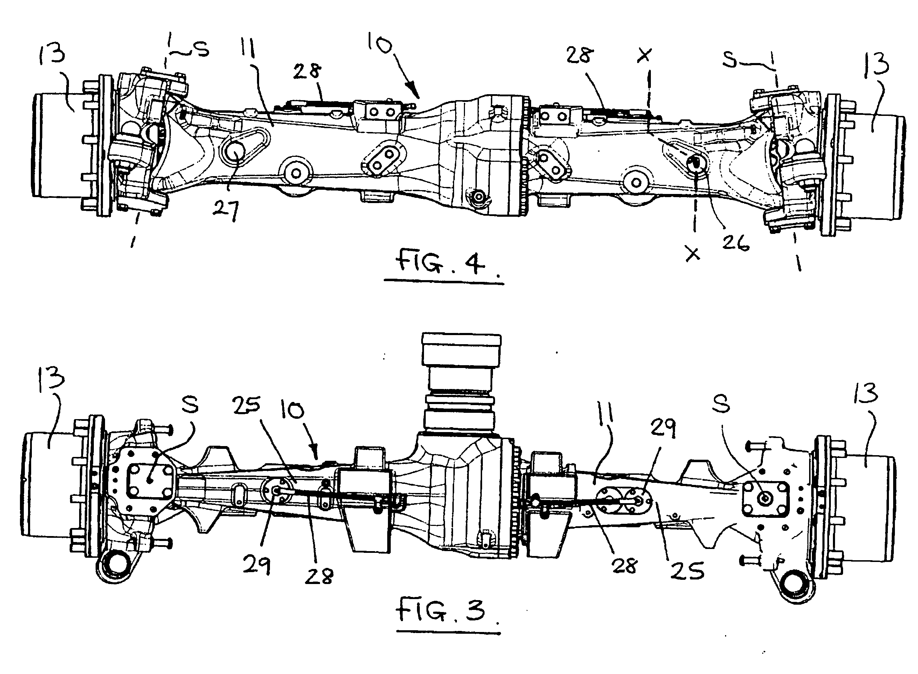

- Figures 3 & 4: show plan and side views of the axle of Figure 2;
- Figure 5: shows a section on line X-X of Figure 4, and
- Figure 6: shows a section of the axle on the line X-Y of Figure 4.

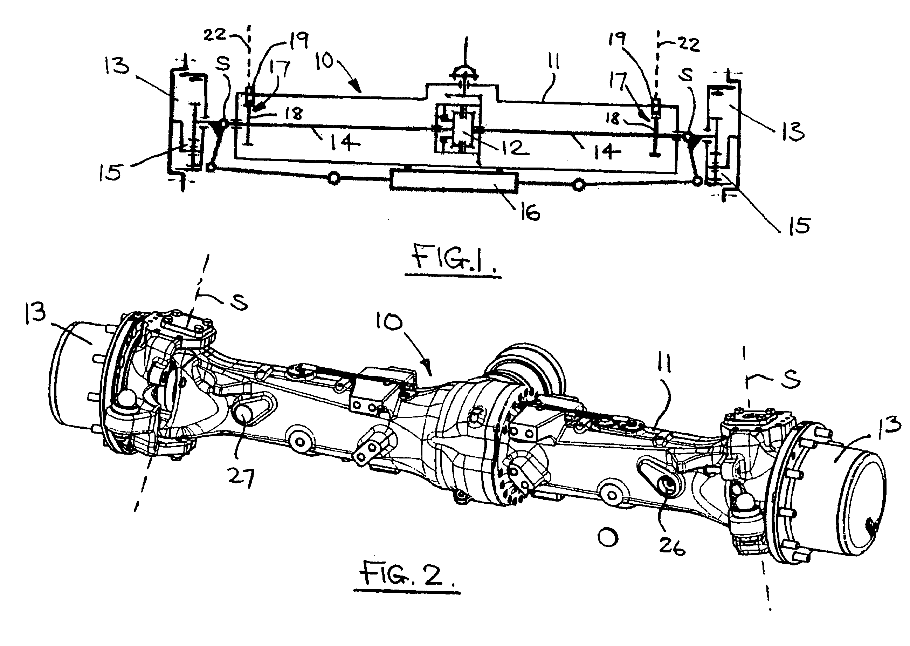

Referring to Figures land 2, the front axle 10 has a casing 11 which houses a central differential 12 which drives outer wheel hubs 13 via drive shafts 14 and final reduction gears 15, housed in hubs 13, which are of the customary epicyclic form. The wheel hubs 13 are steerable about generally vertical axis S using a hydraulic cylinder 16 which is mounted on the axle casing 11 as shown in Figure 1.

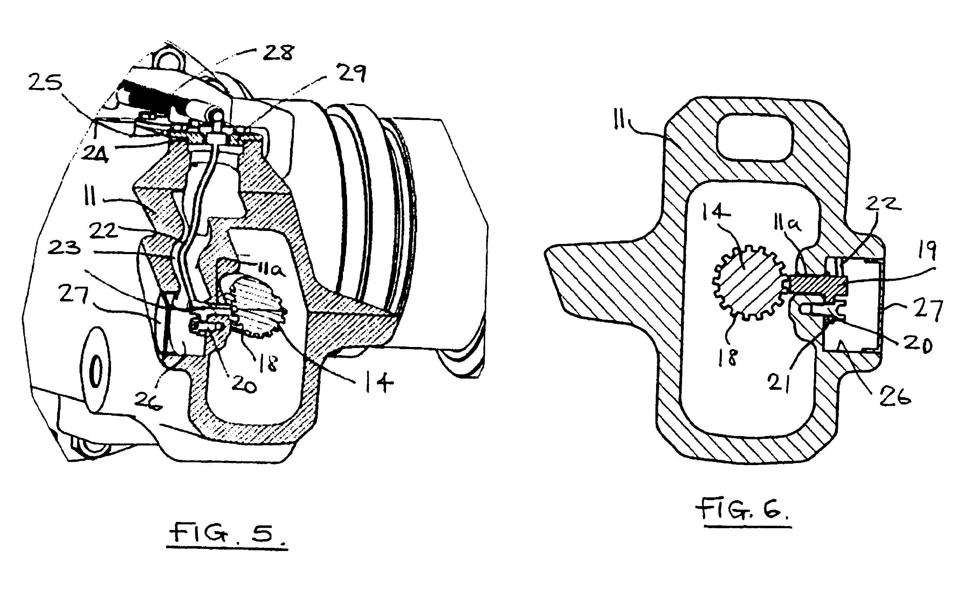

The axle is provided with a pair of wheels speed sensing devices 17 which each comprise a toothed formation 18 which is carried by or formed in the associated drive shaft 14 as best seen in Figures 5 and 6. The wheel speed sensing device also includes a magnetic field effect sensor 19 which operates on the well known Hall effect and which is supported in the axle casing in 11 at a location on the differential side of each associated final reduction gear 15 of the axle.

As will be appreciated, since each toothed formation 18 and sensor 19 is located on the differential side of the associated final reduction gear 15 it rotates at a higher rotational speed than the wheel hub 13 which means that the toothed sensor is required to have less teeth in order to provide the necessary high frequency output to ensure its accuracy. Also, as can be seen from Figures 5 and 6, the sensor 19 is well supported in the axle casing 11 by a bolt 20 which extends through a fixing flange 21 associated with each sensor. This good support of the sensor and the good support of the toothed formation 18 formed on each drive shaft 14 by the drive shaft bearings ensures that the air gap between the teeth 18 and the sensor 19 is accurately maintained during the operation of the sensor as there will relatively little radial movement of the shaft 14 relative to the sensor. This again ensures accurate and reliable speed outputs from the sensor 19.

The output from sensor 19 is fed by a cable 22 via an internal passage 23 in the casing 11 to an output aperture 24 formed in the upper surface 25 of the axle casing 11. Thus the cable 22 is well protected against damage and emerges through the upper surface 25 of the axle casing where it is least likely to be damaged during use on the tractor.

Sensor 19 is mounted in a support aperture 11a formed within a support chamber 26 of the casing and this support chamber is closed off by a cap 27 to further protect the sensor.

The upper end of cable 22 when it emerges from the upper surface 25 of the axle casing is protected within an armoured hose 28 after emerging from a cap 29 which closes the output aperture 24.

The present invention thus provides a vehicle axle which has a wheel speed sensing arrangement which is particularly well suited to use in vehicles such as agricultural tractors and which, due to the firm support of the sensor and toothed rotating element and the protection afforded to the sensor provides accurate speed readings and is also well protected. Also, by providing the toothed formation 18 on a faster rotating portion of the wheel drive line on the differential side of the final reduction gears 15, toothed formation requires less teeth and is therefore cheaper to produce.

## Claims

1. A vehicle axle (10) having a casing (11), a central differential (12) which drives outer wheel hubs (13) via respective final reduction gears (15), and drive shafts (14) housed within the axle casing, the axle being **characterised in that** the axle casing (11) supports at least one wheel speed sensing device (17) on the differential side of the associated reduction gear (15).

2. An axle according to claim 1 **characterised in that** two wheel speed sensing devices (17) are supported one on each side of the central differential (12) between the differential and the respective final reduction gear (15).

3. An axle according to claim 1 or 2 **characterised in that** the wheel hubs (13) are each steerable about a respective substantially vertical steering axis (S) located between each respective drive shaft (14) and the associated final reduction gear (15).

4. An axle according to any one of claims 1 to 3 **characterised in that** the or each wheel speed sensing device (17) comprises a toothed formation (18) carried by or formed on the associated drive shaft (14) to rotate therewith and a magnetic field effect sensor (19) supported on the axle casing (11) adjacent the toothed formation to provide an output signal which varies in dependence with speed of rotation of the drive shaft (14) and hence the associated wheel hub (13).

5. An axle according to claim 4 **characterised in that** the sensor (19) is mounted within the axle casing (11) and an output cable (22) leading from the sensor passes (23) within the casing from the sensor (19) to an output aperture (24) in the casing.

6. An axle according to claim 5 **characterised in that** the output cable (22) extends from the sensor (19) to the output aperture (24) via an internal passage (23) within a wall of the casing (11).

7. An axle according to claim 5 or 6 **characterised in that** the output aperture (24) is in an upper surface (25) of the axle casing.

8. An axle according to any one of claims 4 to 7 **characterised in that** the sensor (19) is mounted in a support aperture (11a) in a support chamber of the axle casing, the sensor being protected in the support chamber (26) by a cap (27) which closes-off the chamber.
